(19) Europäisches Patentamt
European Patent Office
Office européen des brevets

(11) **EP 4 060 429 A1**

(12) **EUROPEAN PATENT APPLICATION**

(43) Date of publication:
**21.09.2022  Bulletin 2022/38**

(21) Application number: **21163658.4**

(22) Date of filing: **19.03.2021**

(51) International Patent Classification (IPC):
***G05B 13/02*** *(2006.01)*

(52) Cooperative Patent Classification (CPC):
**G06N 3/0454; G05B 13/0265; G06N 3/006;
G06N 3/08**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Siemens Aktiengesellschaft
80333 München (DE)**

(72) Inventors:
• **Lohse, Oliver
85614 Kirchseeon (DE)**
• **Robl, Peter
94133 Röhrnbach (DE)**

(54) **CONTROLLING A MANUFACTURING SCHEDULE BY A REINFORCEMENT LEARNING TRAINED AGENT**

(57)    In conclusion the invention concerns a method for controlling a manufacturing schedule to manufacture a product (1, n) in an industrial manufacturing environment (100), a method for training an agent (AG1, AGn) by reinforcement learning to control manufacturing schedule for manufacturing a product (1, n) and an industrial controller (1000). To improve the capability to react to unforeseen events in an industrial manufacturing process, while producing products with a high efficiency it is proposed to:

- provide a product specific state observation (s1, sn) corresponding to the product (1, n) to a trained agent (AG1, AGn) as an input,
- determining a subsequent manufacturing step (MS+1) for the product (1, n) as an action (a1, an), and
- performing the subsequent manufacturing step (MS+1) of the action (a1, an).

FIG 3

EP 4 060 429 A1

## Description

The invention concerns a computer implemented method for controlling a manufacturing schedule (a sequence of manufacturing steps) to manufacture a product in an industrial manufacturing environment by a trained agent. The invention further concerns a method for training the agent by reinforcement learning and an industrial controller.

Controlling product flow through an industrial manufacturing environment is a very complex task, especially when errors and/or failures occur in real time and their consequences must be considered and minimized. Very similar problems occur when products with a higher priority must be manufactured. Up to now mitigation of consequences has been a task provided by experienced manufacturing personnel, that has the experience to decide what solutions are best and what measures to take.

Due to increasing complexity of manufacturing processes and increased flexibility of manufacturing equipment there is a need to optimize the mitigation of consequences of errors/failures for example of single machines or whole areas of a manufacturing plant.

When referring to the terms: agent, actor, critic, state, actions of an actor, environment, reward, ... those terms are used concerning actor-critic based AI algorithms as e.g. shown in:
"Multi-Agent Actor-Critic for Mixed Cooperative-Competitive Environments" (arXiv:1706.02275v4 https://arxiv.org/abs/1706.02275v4)

The concept of Proximal Policy Optimization is known from:
"Proximal Policy Optimization Algorithms" (arXiv:1707.06347v2 https://arxiv.org/abs/1707.06347v2)

The problem to be solved by this invention is to improve the capability to react to unforeseen events in an industrial manufacturing process, while producing products with a high efficiency. Such unforeseen events can be machine failure or maintenance or unplanned products to be produced with a higher priority.

The problem is solved by a method according to claim 1. The method is a computer implemented method for controlling a manufacturing schedule to manufacture a product in an industrial manufacturing environment. The manufacturing schedule is comprised of the manufacturing steps needed so manufacture the single products. The arrangement and timing of the steps leads to a schedule for the whole manufacturing environment. The manufacturing environment comprises multiple machines to carry out manufacturing steps for the products. A trained agent corresponding to each product is provided, wherein the agent has been trained by reinforcement learning to determine an action for its product based on a product specific state-observation.

The method comprises the steps:

- providing the product specific state observation corresponding to the product to the agent as an input,

- determining a subsequent manufacturing step for the product as an action, based on the product specific state observation and

- performing the subsequent manufacturing step of the action.

To improve the method, the agent only receives/is provided with a product specific state observation when not currently in a manufacturing step or in transportation.

Simplified, the method provides an online manufacturing scheduling because the schedule used in the manufacturing process is not fixed but is controlled by the agents and therefore optimally adapted to the current situation. The method as shown has the advantage of being based on reinforcement learning. This allows the schedule not to be provided by biased AI algorithms (e.g. trained by supervised or rule-based learning processes) since they would inherit human inefficiencies and biases already as a part of existing (training) schedules.

The invention further enables reacting to real time problems during the process of controlling the schedule of the machines and products, since each agent can decide for its product what to do next. The training of the agent ensures, that those decisions are not selfish but provide the best solution for the whole manufacturing environment. This means, that an agent can decide an action that short sighted will lead to a longer processing time for its own product but allows for all products to be completed faster in the long view.

In other words, each product has its own agent. The products agent decides how the product moves through the manufacturing environment (e.g. the factory). If necessary, a batch of identical products, that need to be processed by the same machines (e.g. for quality assurance and traceability) it is possible to provide one agent for a batch of products, that either controls the whole batch or a copy of the agent is provided for each product. In the following it will be assumed that one product has one agent.

The product specific state-observation can be provided by model of the environment, e.g. a digital twin. During deployment it is not necessary to always have a full-scale model, but rather provide updated states that are part of the observations used. Those state observations usually are part of every production control system.

The product specific state observation provides relevant data from the manufacturing environment for a current state of the (real-world) manufacturing environment and can be provided in the following form:
observation_product = [product ID, product priority, state of product, position of product, history of product, time, queue-length machine 1, ..., queue length machine n]

In another embodiment of the invention, the product specific state-observation for the product comprises at least two or more of the following parameters:

- an identifier of the product,

- a priority of the product,
- current state of the product,
- current position of the product,
- process history of the product,
- current increment of time and/or
- queue-length of the machines.

Especially a combination of at least a current state of the product, the current position of the product, the process history of the product and the queue-length of all available machines this enables a basis for determining an action based on the current state of the manufacturing site.

The process history can comprise an initial state (at the beginning of the production) which encodes the machines required for the current product. The initial state (no manufacturing step has been conducted) comprises a false boolean value for the machines yet to be used. The machines that do not have to be used at all for this product will be set as true in the initial state - so that the actor will always know that those machines do not have to be used.

Every product can be described as a product object, e.g. comprising the following parameters, and can be used as a data source for a state observation. The product objects are part of a model environment. The product specific state observation can preferably comprise all of the following parameters.

ID: Identification number of the product object. Status: Current state the product is in, e.g. processing, moving, waiting.

Position: Indicates on which machine the product is currently located.

Priority: Priority of the product

Process history: Keeps track of which machines the product has already been to.

Complete: Boolean that is set to "True" once the product has completed all processing steps.

The product specific state-observation provides the data needed by the agent to decide what action to take, thus what machine to use next.

In another embodiment of the invention, the agent comprises a neural network-based actor with output nodes. Neural networks are also called artificial neural networks and are known from the state of the art. In this case the neural network used has output nodes corresponding to the machines, especially one output node for each machine in the environment. The actor can also comprise an output node for the action "no operation" meaning that under the current circumstances it is best to stay in the current queue or in the current machine. The neural network based actors and critics in this invention have shown to deliver good results when using 3 to 5 hidden layers.

The step of determining the subsequent manufacturing step can comprise selecting one of the machines to carry out the subsequent manufacturing step. The manufacturing step can be equal to the machine that is selected, when the machine offers one manufacturing step. When a machine offers multiple independent manufacturing steps, each of the steps can be treated as a single virtual machine - with an output node for each virtual machine.

Every node provides an activation value as an output, wherein the machine corresponding to the node with highest activation value is chosen for the subsequent manufacturing step.

In a further embodiment the agent comprises a neural network-based actor with input nodes for the product specific state observation. The actor further has at least one input node for each of the following parameters:

- the queue length of the machines, wherein one node for each machine is provided and
- the process history of the product.

In a preferred embodiment the actor has one input node for every parameter in the state observation.

In a preferred embodiment the neural network of the agent has input nodes for the product specific state observations and output nodes corresponding to the machines, especially one output node for each machine in the environment and one output node for the function no operation.

In a further embodiment of the invention a product specific state observation is provided to each agent of each product. In other words, every agent is provided with the product specific data regarding the current state of its product to determine its next action.

A further embodiment of the invention comprises repeating the steps of providing, determining, and performing until the product is finished, especially repeating the steps for every manufacturing step of one or more products. This can be determined by checking the process history data of all products. If all process history data fields are true, then this episode of manufacturing can be set as complete. This can be handled on a global level for all products but also can be used to determine if a subset of products is finished (e.g. when a set of particularly highly prioritized products must be manufactured). The product specific state observation directly shows the finished state when the process history is true for all machines. To save date these states can further be encoded by known encoding schemes.

Method according to one of the preceding claims, wherein the agent has been trained using a critic, the critic having input nodes for a global state observation. The global state observation could be as a matrix of all product specific state observations. The global state observation could also be optimized to remove doubled data sets.

The problem is further solved by a computer implemented method for training an agent by reinforcement learning. The agent is trained to control a manufacturing schedule for manufacturing a product based on an environment model of an industrial manufacturing environment. The environment model comprises all necessary information (data) about the manufacturing environment. A great advantage of the current invention is, that the environment model can use data that is available in most manufacturing sites anyway - like the queue length of a machine. The method for training the agent can be combined with any of the preceding embodiments.

An agent corresponding to each product is provided, the agent comprising a neural network-based actor with actor-parameters. The actor-parameters are trainable or tunable since the parameters of the neural network determine its function. The actor comprises a set of initial parameters - e.g. randomly filled, or from an existing case of a similar manufacturing environment. For the neural network of the actor the parameters can also be called weights and biases. Training the agent comprises the steps:

In a step of determining, by the actor, an action for the product based on a product specific state observation. In the beginning those actions can be random and will be improved over time, by tuning the parameters of the actor.

In a further step an agent specific reward for the action is determined by the environment model. The agent specific reward is also a product specific reward, since the agent directly corresponds to a product. The agent specific reward then is used by the environment model to determine a global reward, wherein for a global reward the sum of all agent specific rewards can be used. The action comprises the next manufacturing step for the product, thus the next machine the product travels to or if not - the status "stay in position". On this basis the environment model changes its state to reflect the actions and outputs a subsequent global state, which can be provided as a subsequent global state observation. The reward is determined by a reward function, e.g. a reward of (-1) can be awarded for every time step a product consumes. Thus, the longer the product takes the lower the reward.

In a further step an activation value is determined by a neural network-based critic. The activation value is determined based on a global state observation, a global reward, and a subsequent global state observation.

The global state observation comprises states of all products, therefore the critic does not only evaluate the action of the agent itself but evaluates the action in context of all other agents and the knowledge of the whole system. This enables a reinforcement learning process during which the parameters of the actor are not only adjusted according to a self-serving policy but allows to find an optimal solution for the environment model and therefore the manufacturing environment overall. The global reward is the sum of all product specific rewards. the more negative the global reward is, the longer the overall manufacturing process took.

The global state observation can be provided as a matrix of all product specific state observations e.g.

as follows:
observation_global = [observation_product_1[], ..., observation_product_n[]]

Additionally, or alternatively the global state observation can be provided in the following form:
observation_global = [state of all products (moving, processing, waiting), position of every product queue-length machine 1, ..., queue length machine n]

The difference in data comprised in the global state observation versus the data in the product specific state is a key aspect of the invention. The critic works based on manufacturing environment specific information to determine if the agents as a whole work in the best interest of the manufacturing environment. The agents on the other side decide merely based on information for its very own product and does not take information about the other products into account. The training of the actor by the critic ensures that the agents do not act selfishly but also take into consideration that their actions reflect on the whole system.

In a further step the parameters of the actor are updated based on the activation value of the critic. This can be realized by known reinforcement learning algorithms.

In a preferred embodiment the training process is based on multiple products with an agents provided for each product / product object. To achieve good results multiple products with a random or statistical distribution of priorities can be used.

A further advantageous embodiment of the invention comprises the step of:

- determining a loss value by applying a proximal policy optimization on the activation value of the critic
- updating the parameters of the actor based on a result of the proximal policy optimization.

In some cases, policy gradient methods tend to be too rough of a signal (e.g. high amplitude swings which result in catastrophic drops in performance) to update the policy of the actor in a meaningful way. Proximal policy optimization (PPO) offers tools to improve learning significantly, e.g. optimizing a surrogate objective function using stochastic gradient ascent. Surprisingly PPO has shown to deliver much improved performance, even in the multi agent environment proposed by the current invention.

In other words the step of updating the parameters of the actor based on the activation value of the critic is performed by applying a proximal policy optimization on the activation value of the critic and updating the parameters of the actor based on a result of the proximal policy optimization.

In a further embodiment of the invention determining the product specific reward for the action is based on a reward function awarding a negative reward for each action and/or each time step an agent uses. Preferably the product specific reward is weighed by a priority of the product. The critic therefore tries to minimize the penalty induced by the negative reward. The higher the priority of the product the more negative the reward gets. This leads to the critic trying to speed up products with higher priorities.

As an equation the following reward function can be used, with $R_n$ as the reward of the product n, $P_n$ the priority of the product n, t as the current step of time and (-1) as reward value.

$$R_n = \sum_{t=1}^{T} (P_n * (-1))$$

In a further embodiment of the invention determining the global reward is determined as a sum of all rewards of all agents. This can be realized by the following equation.

$$R_{ges} = \sum_{n=1}^{N} R_n$$

To compare complete episodes an episode-reward can be determined at the end of each training episode. A training episode is complete when all product objects have completed their machine history, all machines that had to be used by the specific product are "true" for all products.

In a further embodiment of the invention the environment model comprises machine objects, the machine objects comprising at least two or more of the following parameters:

- An identification number of the machine object, allowing the machine object to be identified.
- A processing time matrix with processing times of the machine object, especially processing times for all operations allowable in the machine object. It is possible that a machine object only has one processing time entry but more likely to have multiple entries for different manufacturing steps offered.
- A queue length the product must wait in front of the machine object. The queue length corresponds to actual number of products waiting in front of the machine in the manufacturing environment.
- A status, especially a Boolean indicating if there is a disruption present. If the status of the machine object is e.g. "false" or "0" the machine object is not available for performing its manufacturing steps and will not be considered by the agents.

According to a further embodiment the model environment randomly disables machine objects during training the agents. In other words, to train the agents for unforeseen events, the model environment can be configured to randomly disable machine objects during the training, especially for random durations to simulate the effect of machine failure in the manufacturing environment. The model environment could also use cases of machine failures from known failures from real manufacturing sites. For training purposes, the random failures ensure that no bias is imposed on the training process. The disabling simply can be realized by changing the status to "failure present" in the machine object.

According to a further embodiment the critic comprises a neural network with input nodes for the global state observation and one output node, providing the activation value of the critic. Preferably the critic has one input node for every parameter in the global state observation.

According to a further embodiment the actor comprises a neural network with at least one input node for the parameters queue length of the machines, wherein one node for each machine is provided and the process history of the product, wherein the process history describes all machines the product has been to or weren't needed to begin with.

According to a further embodiment the actor comprises a neural network with output nodes corresponding to the machine objects. Preferably one output node for each machine object in the environment is provided.

The problem is further solved by an industrial controller, especially a programmable logic controller, comprising or connected to a neural processing unit, for controlling a sequence of manufacturing steps to manufacture a product in an industrial manufacturing environment according to a method as described.

In a further embodiment the industrial controller is configured to provide state observations to the agents. The industrial controller controlling the manufacturing schedule has access to all relevant data and can easily be configured to provide them in a format readily accessible for the agents.

FIG 1    shows a schematic manufacturing environment,

FIG 2    an environment model of the manufacturing environment,

FIG 3    a schematic view of agents and their interaction with a model environment and

FIG 4    deployed agents in an industrial controller.

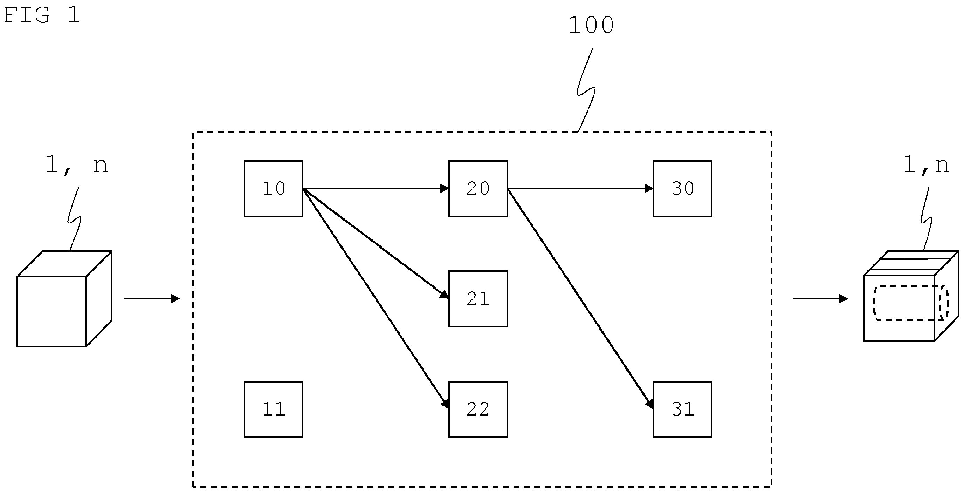

FIG 1 shows a schematic "real-world" manufacturing environment 100. In this case a product 1, n is shown on the left and has to go through the manufacturing environment 100 to achieve its final state. For this purpose the manufacturing environment 100 comprises machines 10,...,31. There are three types of machines a first type of machine 10, 11, a second type of machine 20, 21, 22 and a third type of machine 30, 31. Each type of machine delivers one manufacturing step and is for the sake of explanation interchangeable. So the product 1,n can take a plurality of schedules or routes through the manufacturing environment 100. Shown is that when starting with machine 10 the product one can use three further machines of the second type 20, 21, 22 and then can also use two machines of the third type 30, 31. Even in this simplified example the number of possible combinations for a manufacturing schedule is high. The present invention allows to find an optimal route (an optimal schedule) for every product, while considering the overall efficiency of the whole manufacturing environment 100 and while being able to react to unforeseen events. Each of the machines 10,...,31 provides one manufacturing step. The sum of the manufacturing steps then is the schedule for this product. In more complex environments it is also possible that machines 10,...,31 provide multiple manufacturing steps and that machines aren't easily interchangeable but also comprise different specifications, e.g. the amount of processing time one manufacturing step takes for this particular manufacturing step.

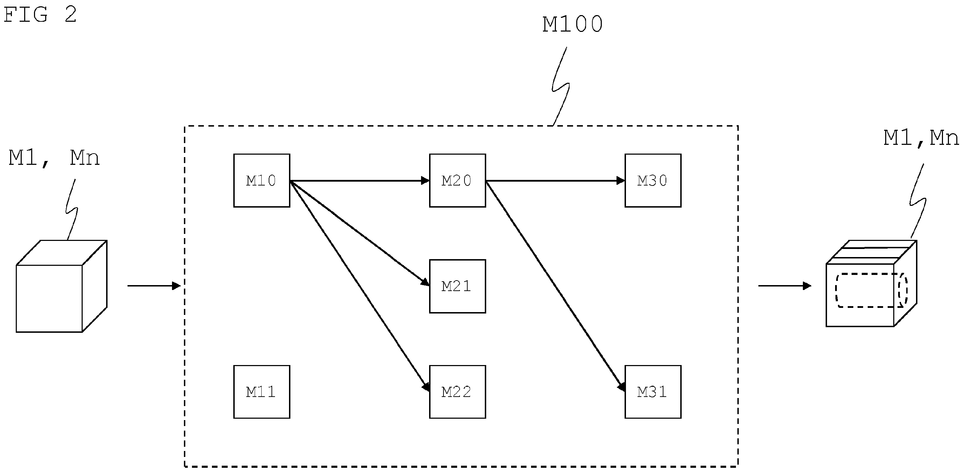

FIG 2 shows an environment model M100 of the manufacturing environment 100 shown in FIG 1. The product from FIG 1 has been replaced with a product object M1,Mn. The product objects M1, Mn can have the following form:

ID: Identification number of the product object.
Status: Current state the product is in, e.g. processing, moving, waiting.
Position: Indicates on which machine the product is currently located.
Priority: Priority of the product
Process history: Keeps track of which machines the product has already been to.
Complete: Boolean that is set to "True" once the product has completed all processing steps.

This shows that the product objects MI,Mn do not need a lot of highly complex data but merely rely on data which is already available in a regular manufacturing process.

The environment model M100 has machine objects M10,...,M31 for each of the machines 10,...,31 from the manufacturing environment 100 in FIG 1. The machine objects M10,...,M31 can have the following form:

ID: Identification number of the machine object.
Processing time: Matrix with all processing times, the time the machine needs to finish a manufacturing step.
Queue: Length of the queue in front of the machine object. The time a product object has to wait until it can be Processed by the machine.
Status: A Boolean indicating the Disruption status of the machine, e.g.: 0 = no disruption and 1 = disruption.

The model environment M100 can be used to train an agent but also can be used to provide data for controlling the schedule when fed with life data of the manufacturing environment 100.

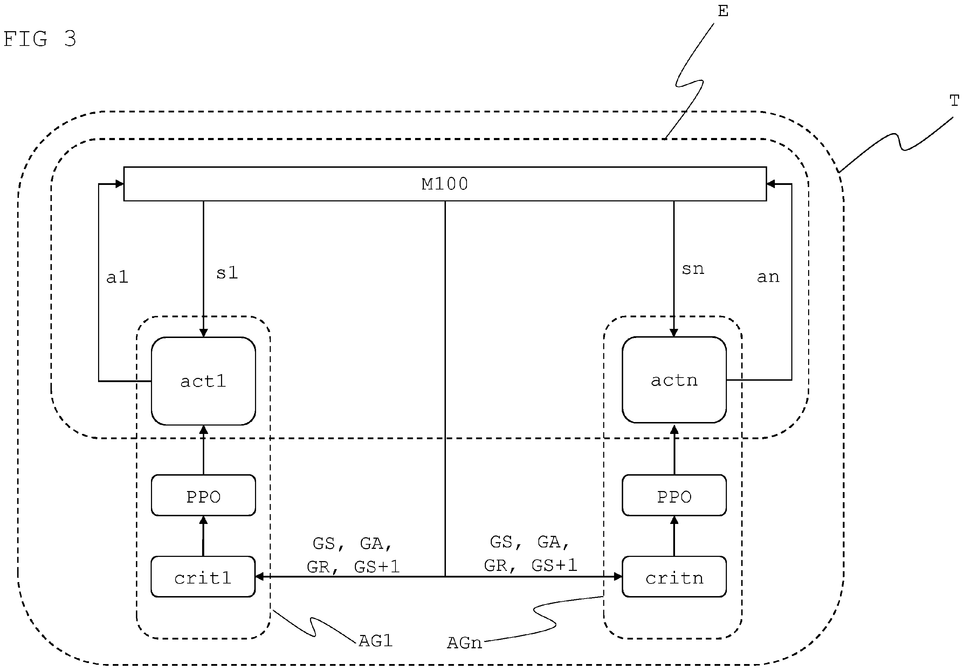

FIG 3 shows a schematic view of agents AG1, AGn and their interaction with the model environment M100 as known from FIG 2. The interaction shown differentiates between execution E and training T.

In general, each agent AG1, AGn comprises an actor act1, actn. The actor act1, actn determines, based on the data provided in a product specific state-observation s1, sn, an action a1, an for the current state which then is executed in the model environment M100.

In other words, exemplary for product 1 (not shown) as an input the actor act1 is provided with the states in the product specific state-observation s1 that directly correspond to the actual state of product 1. The actor act1 then determines the step to take next which it then outputs as the action a1.

For training T purposes, to train and improve the behavior of the actors act1, actn by updating the parameters of the actors act1, actn, each agent AG1, AGn comprises a neural network based critic crit1, critn which evaluates the actions taken by the actors act1, actn.

To assure that the agents AG1, AGn do not only act to their own interest but act to the interests of the whole manufacturing environment 100, the critics crit1, critn base their evaluation of the actions a1, an more information than the actros act1, actn.

The critics crit1, critn are provided with a current global set of states GS and a subsequent global set of states GS+1 resulting from the actions of the agents AG1, AGn. The critics crit1, critn are furthermore provided with a global reward RG, e.g. a sum of all product/agent specific rewards. As an advantage and direct result of the training process based on different data bases the agents AG1, AGn do not base their output on the product specific state observation.

The critics are preferably provided with a set of global actions GA, which include all actions a1, an of all agents AG1, AGn for the current step of time. This is especially relevant when an agent decides an action that cannot be executed in the environment, e.g. because the action is not allowable currently. This could be the case when the product is being transported and cannot leave the transport mechanism in the current step.

Furthermore, for training T purposes it is shown that the output of the critics crit1, critn is further applied to a Proximal Policy Optimization Algorithms, which leads to an improved training of the neural network based actors act1, actn.

The neural network based critics crit1, critn comprises parameters (weights and biases) which are trained during the training T. To achieve this, based on an activation value determined by the critic crit1, critn a loss value is calculated based on a loss function. The neural network of the critic crit1, critn is updated based on the loss value. Methods for updating critics based on loss values are known.

During execution E, also called deployment, the critics crit1, critn are not used anymore and the agents AG1, AGn decide on their own. The policy of the agents has been trained to not decide selfishly but to take into account the overall production efficiency.

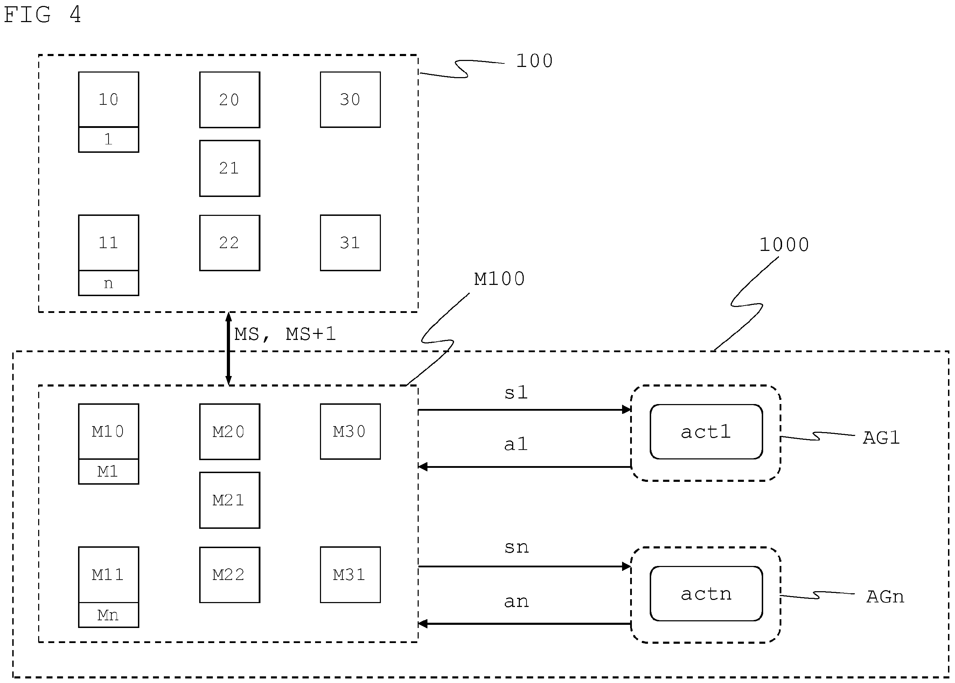

FIG 4 shows deployed agents AG1, AGn in an industrial controller 1000. The industrial controller 1000 comprises a processor and a memory (not shown) and is configured to execute agents as described by this invention. Furthermore, the industrial controller 1000 is configured to provide product specific state observations s1, sn. This can be realized by a full model environment M100 on the controller. The model environment can alternatively or additionally be calculated in an edge device or a cloud-based service. Since the data required for the invention is not very memory intensive (most of the states can be depicted as Booleans or simple integers) a modern industrial controller can handle the whole model environment M100.

The model environment M100 directly communicates with the manufacturing environment 100. This can be realized as a service, which takes the actions provided by the actors and translates them into actual commands for e.g. transportation systems to take the products 1, n to the next machine 10,...,31. The communication can be provided as actions a1, an or as shown as manufacturing steps MS, MS+1.

In conclusion the invention concerns a method for controlling a manufacturing schedule to manufacture a product (1, n) in an industrial manufacturing environment (100), a method for training an agent (AG1, AGn) by reinforcement learning to control manufacturing schedule for manufacturing a product (1, n) and an industrial controller (1000). To improve the capability to react to unforeseen events in an industrial manufacturing process, while producing products with a high efficiency it is proposed to:

- provide a product specific state observation (s1, sn) corresponding to the product (1, n) to a trained agent (AG1, AGn) as an input,
- determining a subsequent manufacturing step (MS+1) for the product (1, n) as an action (a1, an), and
- performing the subsequent manufacturing step (MS+1) of the action (a1, an).

Reference signs

| | |
|---|---|
| 1, n | product to be manufactured |
| M1, Mn | product object |
| MS | manufacturing step |
| MS+1 | subsequent manufacturing step |
| Ag1, Agn | agent corresponding to each product |
| act1, actn | actor of the agent |
| crit1, critn | critic of the agent |
| a1, an | action of the agent |

| | |
|---|---|
| s1, sn | product specific state |
| GS | global state |
| GS+1 | subsequent global state |
| GA | global actions |
| GR | global reward |
| 100 | manufacturing environment |
| 10,...,31 | machines in the manufacturing environment |
| M100 | model environment |
| M10,...,M31 | machine objects in the model environment |
| T | Training |
| E | Execution |
| 1000 | Industrial Controller |

**Claims**

1. Computer implemented method for controlling a manufacturing schedule to manufacture a product (1, n) in an industrial manufacturing environment (100),
the manufacturing environment (100) comprising multiple machines (10, 31) to carry out manufacturing steps (MS), wherein a trained agent (AG1, AGn) corresponding to each product (1, n) is provided, wherein the agent (AG1, AGn) is reinforcement learning trained to determine an action (a) for its product (1, n), the method comprising the steps:

   - providing a product specific state observation (s1, sn) corresponding to the product (1, n) to the agent (AG1, AGn) as an input,
   - determining a subsequent manufacturing step (MS+1) for the product (1, n) as an action (a), based on the product specific state-observation (s1, sn) (100), and
   - performing the subsequent manufacturing step (MS+1) of the action (a).

2. Method according to claim 1, wherein the product specific state-observation (s1, sn) for the product (1, n) comprises at least two or more of the following parameters:

   - an identifier of the product,
   - a priority of the product,
   - current state of the product,
   - current position of the product,
   - process history of the product,
   - current increment of time and/or
   - queue-length of the machines.

3. Method according to claim 1 or 2, wherein the agent (AG1, AGn) comprises a neural network based actor with output nodes corresponding the machines (10, 31), especially one output node for each machine (10, 31) in the manufacturing environment (100).

**4.** Method according to one of the preceding claims, wherein the agent (AG1, AGn) comprises a neural network based actor (act1, actn) with input nodes for the product specific state observation (s1, sn), preferably one input node for every parameter in the product specific state observation (s1, sn), the actor (act1, actn) further having at least one input node for the following parameters:

- the queue length of the machines, wherein one node for each machine is provided and
- the process history of the product.

**5.** Method according to one of the preceding claims, wherein a product specific state observation (s1, sn) is provided to each agent (AG1, AGn) of each product (1, n).

**6.** Method according to one of the preceding claims, comprising repeating the steps of providing, determining, and performing until the product (1, n) is finished, especially repeating the steps for every manufacturing step (MS) of one or more products (1, n).

**7.** Method according to one of the preceding claims, wherein the agent has been trained using a critic, that has access to a global state observation.

**8.** Computer implemented method for training an agent (AG1, AGn) by reinforcement learning to control manufacturing schedule for manufacturing a product (1, n) based on an environment model (M100) of an industrial manufacturing environment (100), wherein an agent(AG1, AGn) corresponding to each product (1, n) is provided, the agent (AG1, AGn) comprising a neural network based actor (act1, actn) with actor-parameters, wherein training the agent (AG1, AGn) comprises the steps:

- determining, by the actor (act1, actn), an action (a1, an) for the product (1, n) based on a product specific state observation (s1, sn),
- determining, by the environment model (M100), an agent specific reward for the action (a1, an) and a global reward (GR) based on all agent specific rewards of all agents (AG1, AGn),
- determining, by a neural network based critic (crit1, critn), an activation value based on a global state observation (GS), a global reward (GR) and a subsequent global state observation (GS+1),
- updating the parameters of the actor (act1, actn) based on the activation value of the critic (crit1, critn).

**9.** Method according to claim 8, further comprising the step

- determining a loss value by applying a proximal policy optimization (PPO) on the activation value of the critic (crit1, critn),
- updating the parameters of the actor (act1, actn) based on a result of the proximal policy optimization (PPO).

**10.** Method according to claim 8 or 9, wherein determining the product specific reward for the action (a1, an) is based on a reward function awarding a negative reward for each action (a1,an) and/or each time step an agent (AG1, AGn) uses, preferably weighed by a priority of the product (1,n).

**11.** Method according to one of the claims 8 to 10, wherein the global reward (GR) is determined as a sum of all rewards of all agents (A1, An).

**12.** Method according to one of the claims 8 to 11, wherein the environment model (M100) comprises machine objects (M10, M31), the machine objects comprising at least two or more of the following parameters:

- an identification number of the machine object,
- a processing time matrix with processing times of the machine object (M10,...,M31),
- a queue length the product (1, n) has to wait in front of the machine object and/or
- a status of the machine object (M10,...,M31), especially a Boolean indicating if there is a disruption present.

**13.** Method according to one of the claims 8 to 12, wherein in the model environment (M100) randomly disables machine objects (M10,...,M31) during training the agents (AG1, AGn).

**14.** Method according to one of the claims 8 to 13, wherein the critic (crit1, critn) comprises a neural network with:

- input nodes for the global state observation (GS), preferably one input node for every parameter in the global state observation (GS), and
- one output node, providing the activation value of the critic.

**15.** Method according to one of the claims 8 to 14, wherein the actor (act1, actn) comprises a neural network with at least one input node for the following parameters:

- the queue length of the machines, wherein one node for each machine is provided and
- the process history of the product.

**16.** Method according to one of the claims 8 to 15, wherein the actor (act1, actn) comprises a neural network with output nodes corresponding to the machine objects (M10,...,M31), especially one output node for each machine object (M10,...,M31) in the environment (100).

17. Industrial controller, especially a programmable logic controller comprising or connected to a neural processing unit, for controlling a sequence of manufacturing steps to manufacture a product (1, n) in an industrial manufacturing environment (100) according to any of the claims 1 to 8.

18. Industrial controller according to claim 17, configured to provide state observations (s1,sn) to the agents (AG1, AGn).

FIG 1

FIG 2

M100

M1, Mn

M1,Mn

EP 4 060 429 A1

FIG 3

EP 4 060 429 A1

EP 4 060 429 A1

FIG 4

Europäisches
Patentamt

European
Patent Office

Office européen
des brevets

## EUROPEAN SEARCH REPORT

**Application Number**

EP 21 16 3658

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/162559 A1 (SUSTAETA ANGEL [US] ET AL) 21 May 2020 (2020-05-21) * the whole document * | 1-18 | INV. G05B13/02 |
| X | US 2013/223724 A1 (WERSBORG INGO STORK GENANNT [DE] ET AL) 29 August 2013 (2013-08-29) * paragraph [0243] - paragraph [0252] * | 1,8,17, 18 | |
| A | US 2020/057416 A1 (MATSUBARA TAKAMITSU [JP] ET AL) 20 February 2020 (2020-02-20) * the whole document * | 1-18 | |
| A | US 2020/160168 A1 (YANG JIACHEN [US] ET AL) 21 May 2020 (2020-05-21) * the whole document * | 1-18 | |

**TECHNICAL FIELDS SEARCHED (IPC)**

G05B
G06N

The present search report has been drawn up for all claims

| Place of search | Date of completion of the search | Examiner |
|---|---|---|
| The Hague | 2 September 2021 | José Luis Meseguer |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 16 3658

This annex lists the patent family members relating to the patent documents cited in the above-mentioned European search report.
The members are as contained in the European Patent Office EDP file on
The European Patent Office is in no way liable for these particulars which are merely given for the purpose of information.

02-09-2021

| Patent document cited in search report | | Publication date | Patent family member(s) | | Publication date |
|---|---|---|---|---|---|
| US 2020162559 | A1 | 21-05-2020 | US 2009204245 A1 | | 13-08-2009 |
| | | | US 2017359418 A1 | | 14-12-2017 |
| | | | US 2020162559 A1 | | 21-05-2020 |
| US 2013223724 | A1 | 29-08-2013 | EP 2585248 A1 | | 01-05-2013 |
| | | | EP 2585249 A1 | | 01-05-2013 |
| | | | EP 2585975 A1 | | 01-05-2013 |
| | | | US 2013178952 A1 | | 11-07-2013 |
| | | | US 2013178953 A1 | | 11-07-2013 |
| | | | US 2013223724 A1 | | 29-08-2013 |
| | | | WO 2012000648 A1 | | 05-01-2012 |
| | | | WO 2012000649 A1 | | 05-01-2012 |
| | | | WO 2012000650 A1 | | 05-01-2012 |
| US 2020057416 | A1 | 20-02-2020 | CN 110837893 A | | 25-02-2020 |
| | | | EP 3620868 A1 | | 11-03-2020 |
| | | | JP 2020027556 A | | 20-02-2020 |
| | | | US 2020057416 A1 | | 20-02-2020 |
| US 2020160168 | A1 | 21-05-2020 | NONE | | |

EPO FORM P0459

For more details about this annex : see Official Journal of the European Patent Office, No. 12/82